# EUROPEAN PATENT APPLICATION

(11) **EP 4 606 532 A1**
(43) Date of publication of application: **27.08.2025**
(21) Application number: 25160253.8
(22) Date of filing: 26.02.2025
(51) Int. Cl.: B25J 9/14, B25J 15/00, B25J 15/06, B65G 47/91

(54) **GRIPPING ARRANGEMENT FOR A ROBOT DEVICE**

(30) Priority: 26.02.2024 DE 102024105338
(71) Applicant: Sereact GmbH, 70565 Stuttgart (DE)
(72) Inventor: Tuscher, Dominik, 76307 Karlsbad (DE); Sponner, Carsten, 70599 Stuttgart (DE); Gulde, Ralf-Leonard, 70569 Stuttgart (DE)
(74) Representative: Fuchs Patentanwälte Partnerschaft mbB

(57) **Abstract**

The present disclosure relates to a gripping arrangement for a robot device. The gripping arrangement comprises at least two suction units having suction cups which are actively and independently movable between a retracted position and an extended position.

## Description

The present disclosure relates to a gripping arrangement for a robot device. The gripping arrangement comprises at least two suction units having suction cups which are actively and independently movable between a retracted position and an extended position.

### Background of the Disclosure

For automized handling and sorting of objects which are not pre-oriented in a defined position, there are known different gripping arrangements for robot devices. This task mainly occurs in the field of commissioning products for dispatch and involves a so called "bin picking process" where the products are picked up by industrial robots or so called cobots, i.e., collaborative robots, with robotic arms from different bins or crates and put into others for collecting the items of an order. The gripping arrangements for such robotic arms may generally be divided into two types, mechanical grippers and vacuum suction grippers. Less often used other types comprise magnetic gripping arrangements and adhesive gripping arrangements.

While the mechanical grippers may easily be designed to securely grip different objects with a high holding force which ascertains that the object is not dropped while being moved from one place to the other with the arm, this type of gripper is by principle less useful for picking objects from a random pile because it requires free-standing and ideally pre-oriented objects for effective handling. Moreover, the grippers need a certain free space around the object to grab it. The space requirement will even increase when the gripper can be rotated and tilted for advancing the object at its optimal grabbing position.

Hence, for bin picking processes, mainly vacuum suction grippers are used. However, also these grippers still have some disadvantages. For a good grip, the suction cups need to be placed flat on the surface of the objects and the vacuum has to be high enough to prevent the object from falling off. At the same time, the object must not be damaged by the advancing suction cups or the applied reduced pressure. While the latter problem is commonly dealt with by using more than one vacuum gripper, this introduces another problem with non-flat objects. The grippers are arranged in a flat array and, consequently, somehow have to adapt their extension to the surface shape of the object. To this end, the suction cups are sometimes arranged on spring members and the gripper array is pushed onto the surface while the springs allow the grippers to be pushed back by the protruding object contours. This will exert an undesired force on the object to be picked and the compressed spring member pushes the object away from the gripper thus necessitating more vacuum for secure hold. Of course, using an array of grippers instead of a single one also will increase the required space.

Both types of grippers have the disadvantage that a single gripper design will not be suitable for all types of objects. Hence, exchangeable gripping arrangements are used for tasks involving more than a single type of object. However, even though the exchange may be done automatically by the robot device, exchanging the gripper requires time which reduces the productivity. Particularly the vacuum suction grippers are difficult to exchange - if at all. Another problem shared by both types of grippers is a limited extensibility of the grippers restricting the capability of picking objects from deeper bins.

Hence, there is a need for an improved gripping arrangement for a robot device. It should particularly require small space, allow for picking also from deeper bins, ascertain a good grip of the object without damaging it, and be suitable for a large variety of objects thus necessitating less changing operations of the gripping arrangement.

### Summary of the Disclosure

In a first aspect, this disclosure relates to a gripping arrangement for a robot device, the gripping arrangement comprising
- at least two piston-cylinder arrangements, each of the at least two piston-cylinder arrangements having a cylinder and a piston relatively movable thereto between a retracted position and an extended position,
   the piston being a hollow shaft having a first end that is slidably supported in a pressure-tight manner within the corresponding cylinder and having a second end that is provided with a suction cup,
   the cylinder being fluidically connected to a negative pressure source for applying a suction pressure to the corresponding suction cup via the cylinder and the piston to grab or release an object; and
- at least two linear actuators, wherein each of the at least two linear actuators
   is assigned to one of the at least two piston-cylinder arrangements, and
   includes a stationary member and a movable member, which are configured to actively move the piston and corresponding suction cup of the assigned one of the at least two piston-cylinder arrangements between the retracted position and the extended position independent of the other pistons and suction cups of the at least two piston-cylinder arrangements;
wherein a distance between the retracted position and the extended position is between 60.0 mm and 450.0 mm.

In a second aspect, this disclosure relates to a gripping arrangement for a robot device, the gripping arrangement comprising
- at least two suction units, wherein each of the at least two suction units is fluidically connected to a negative pressure source for applying a suction pressure to the corresponding suction unit to grab or release an object; and
- at least two linear actuators, wherein each of the at least two linear actuators
   + is assigned to and connected with one of the at least two suction units, and
   + includes a stationary member and a movable member, which are configured to actively move the assigned suction unit between a retracted position and an extended position independent of the other suction units of the at least two suction units;
wherein a distance between the retracted position and the extended position is between 60.0 mm and 450.0 mm.

In a third aspect, this disclosure relates to a gripping arrangement for a robot device, the gripping arrangement comprising
- at least two suction units, wherein each of the at least two suction units is fluidically connected to a negative pressure source for applying a suction pressure to the corresponding suction unit to grab or release an object; and
- at least two linear actuators, wherein each of the at least two linear actuators
   + is assigned to and connected with one of the at least two suction units, and
   + includes a stationary member and a movable member, which are configured to actively move the assigned suction unit position-controlled between a retracted position, at least one intermediate position, and an extended position independent of the other suction units of the at least two suction units.

In embodiments of the third aspect each of the at least two suction units and/or each of the at least two linear actuators may be provided with a position sensor to provide a closed-loop position control.

In a fourth aspect, this disclosure relates to a gripping arrangement for a robot device, the gripping arrangement comprising
- at least three piston-cylinder arrangements, each of the at least three piston-cylinder arrangements having a cylinder and a piston relatively movable thereto between a retracted position and an extended position,
   the piston being a hollow shaft having a first end that is slidably supported in a pressure-tight manner within the corresponding cylinder and having a second end that is provided with a suction cup,
   the cylinder being fluidically connected to a negative pressure source for applying a suction pressure to the corresponding suction cup via the cylinder and the piston to grab or release an object; and
- at least three linear actuators, wherein each of the at least three linear actuators
   is assigned to one of the at least linear piston-cylinder arrangements, and
   includes a stationary member and a movable member, which are configured to actively move the piston and corresponding suction cup of the assigned one of the at least linear piston-cylinder arrangements between the retracted position and the extended position independent of the other pistons and suction cups of the at least linear piston-cylinder arrangements;
   wherein
- each suction cup has a center point and/or each of the at least three piston-cylinder arrangements has a longitudinal axis, and wherein the center points are spaced from each other by a, preferably the same, spacing distance and/or the longitudinal axes are spaced from each other by a, preferably the same, spacing distance, which spacing distance is between 35.0 mm and 150.0 mm; and/or
- the suction cups of the at least three piston-cylinder arrangements
   - are arranged, and preferably evenly distributed, on a circle; and/or
   - are arranged triangularly.

In a fifth aspect, this disclosure relates to a gripping arrangement for a robot device, the gripping arrangement comprising
- at least three piston-cylinder arrangements, each of the at least three piston-cylinder arrangements having a cylinder and a piston relatively movable thereto between a retracted position and an extended position,
   the piston being a hollow shaft having a first end that is slidably supported in a pressure-tight manner within the corresponding cylinder and having a second end that is provided with a suction cup,
   the cylinder being fluidically connected to a negative pressure source for applying a suction pressure to the corresponding suction cup via the cylinder and the piston to grab or release an object; and
- at least three linear actuators, wherein each of the at least three linear actuators
   is assigned to one of the at least linear piston-cylinder arrangements, and
   includes a stationary member and a movable member, which are configured to actively move the piston and corresponding suction cup of the assigned one of the at least linear piston-cylinder arrangements between the retracted position and the extended position independent of the other pistons and suction cups of the at least linear piston-cylinder arrangements;
wherein
at least one suction cup of the suction cups of the at least three piston-cylinder arrangements is different in size and/or shape from the other suction cups of the at least three piston-cylinder arrangements.

### Details of the Disclosure

The details of this disclosure relate to the aspects described in the summary of disclosure. Where applicable, any of the features of the embodiments described hereinafter may relate to all of the aspects unless explicitly stated differently.

### 1. Embodiments according to the first aspect

In embodiments according to the first aspect, the piston-cylinder arrangements have a cylinder and a piston relatively movable thereto between a retracted position and an extended position.

The cylinder and piston are actively movable relative to each other by means of the linear actuator. The retracted position and the extended position between which movement occurs may be the fully retracted position and the fully extended position of the piston in the cylinder. However, they are not required to be. The movement may also take place in a range which does not use the full possible range of the piston-cylinder arrangement at one or both sides thereof.

The cylinder is fluidically connected to a negative pressure source, such as a vacuum pump, for applying a suction pressure to the corresponding suction cup via the cylinder and the piston to grab or release an object. Optionally, this may be done selectively and independently of the other piston-cylinder arrangements and their suction cups. This option is particularly advantageous as it allows for an optimized reduced pressure level as required by the respective surface of the object contacted by the suction cup or to compensate for an insufficiently airtight contact of the suction cup to the object surface.

The linear actuators which are assigned to the piston-cylinder arrangements include a stationary member and a movable member which are configured to actively move the piston and corresponding suction cup of the piston-cylinder arrangements between the retracted position and the extended position. This configuration may include a mechanical connection of the movable member to the piston of the assigned piston-cylinder arrangement. In other optional configurations, a reverse arrangement having the stationary member instead of the movable member mechanically connected to the piston is also possible. In a further optional configuration, the linear actuator may also be effecting the active movement of the piston only indirectly, i.e., it is not directly mechanically connected to the piston but acts through intermediate members or on a supporting structure. The configuration may particularly be chosen dependent on the type of linear actuator used.

The distance between the retracted position and the extended position of the piston-cylinder arrangement is between 60.0 mm and 450.0 mm. The distance may be in a range of between 60.0 mm and 450.0 mm or between 65.0 mm and 435.0 mm or between 70.0 mm and 420.0 mm or between 75.0 mm and 405.0 mm or between 80.0 mm and 390.0 mm or between 85.0 mm and 375.0 mm or between 90.0 mm and 360.0 mm or between 100.0 mm and 350.0 mm. The distance may be at least 60.0 mm or at least 65.0 mm or at least 70.0 mm or at least 75.0 mm or at least 80.0 mm or at least 85.0 mm or at least 90.0 mm or at least 100.0 mm. The distance may be at most 450.0 mm or at most 435.0 mm or at most 420.0 mm or at most 405.0 mm or at most 390.0 mm or at most 375.0 mm or at most 360.0 mm or at most 350.0 mm.

A ratio r between the fully retracted length lᵣₑₜ and the fully extended length lₑₓₜ defined as r = (lₑₓₜ / lᵣₑₜ) * 100 [%] may be at least 105 % or at least 110 % or at least 115 % or at least 120 % or at least 125 %. The ratio r may be at most 200 % or at most 195 % or at most 190 % or at most 185 % or at most 180 %. The ratio r may be in a range of between 105 % and 200 % or between 110 % and 195 % or between 115 % and 190 % or between 120 % and 185 % or between 125 % and 180 %.

Since the linear actuators can actively move their assigned piston with its suction cup independently of the other pistons and suction cups of the piston-cylinder arrangements, it is possible to create different gripper 3D-footprints, i.e., giving the gripper a height profile matching the surface of the objects to be gripped by specifically extending or retracting single suction cups. In particular, in combination with the large extension ratio of the piston-cylinder arrangement, the actively adjusted gripping arrangement is suitable for a large variety of objects and, consequently, requires less changes between different gripping arrangements tailored to specific objects. At the same time, the holding force of the gripper is optimized because all suction cups of the gripping arrangement can be used as opposed to an arrangement where they are arranged fixedly in a single plane. The suction cups are individually controllable, i.e., individually and independent from each other extendable and retractable and/or can be individually and independent from each other pressurized.

In embodiments, each of the at least two linear actuators may be configured to move the assigned piston and corresponding suction cup of the at least two piston-cylinder arrangements continuously between the retracted position and the extended position. Alternatively, the linear actuators may be configured to move the assigned piston and corresponding suction cup to multiple intermediate positions between the retracted position and the extended position. When using a sufficiently large number of intermediate positions, the variability is approximately the same as when providing continuous motion. For example, linear actuators employing a stepper motor can be used for moving to multiple intermediate positions.

In embodiments, the movable member may be mechanically connected to the piston of the assigned one of the at least two piston-cylinder arrangements to actively move the assigned piston and corresponding suction cup between the retracted position, at least one intermediate position, and the extended position independent of the other pistons and suction cups of the at least two piston-cylinder arrangements. In other optional configurations of this embodiment, a reverse arrangement having the stationary member instead of the movable member mechanically connected to the piston is also possible. In a further optional configuration of this embodiment, the linear actuator may also be effecting the active movement of the piston only indirectly, i.e., it is not directly mechanically connected to the piston but acts through intermediate members or on a supporting structure.

In embodiments, the gripping arrangement may comprise a closed-loop position control system for selectively controlling a position of each piston and corresponding suction cup of the at least two piston-cylinder arrangements. This closed-loop position control system will allow for an exact positioning of the single pistons and give the control system of the robot device precise status information on the present configuration of the gripper arrangement. To this end, each of the piston-cylinder arrangements may be equipped with a position sensor for detecting the position of the piston within the cylinder.

In embodiments, at least one of, preferably all of, the at least two linear actuators may be a pneumatic cylinder arrangement. Alternatively, the linear actuators may be, for example, a hydraulic cylinder arrangement, a linear motor, a belt drive actuator, a linear ball screw actuator, a lead screw actuator, or a spindle arrangement. A pneumatic cylinder arrangement has the advantage of very fast action times whereas the electric motor and actuator alternatives may provide very high positioning precision.

In embodiments, the pneumatic cylinder arrangement may be configured to act as a gas spring and/or cushioning element when inactive. Another advantage of the pneumatic cylinder arrangements is that they simultaneously can be used as a gas spring or damping element towards a force exerted by an object grabbed by the corresponding suction cup. This will allow for a passive force regulation of the gripping arrangement to prevent damage of the object to be handled.

In embodiments, the gripping arrangement may further comprise a spring member, a resilient member, and/or an elastic member arranged between the suction cup and the piston and/or between the linear actuator and its mounting point. Where the linear actuators are no pneumatic cylinder arrangements or do not comprise the configuration as a gas spring and/or cushioning element when inactive, these alternative means can be used for achieving the passive force regulation of the gripping arrangement to prevent damage of the object to be handled. They may also be implemented in addition to this configuration as a double failsafe feature.

In embodiments, at least one of, preferably all of, the at least two linear actuators may be selectively lockable in a selected position between the retracted position and the extended position. They may also be lockable in the retracted position and the extended position. With this function, it can be prevented that the pistons with their suction cups inadvertently move during the grabbing action.

In embodiments, at least one of, preferably all of, the at least two linear actuators
- has a stroke length between 60.0 mm and 600.00 mm; and/or
- can apply a force between 0.1 N and 300 N; and/or
- has a progression of 0 % or of 20 % to 55 % relating to the complete stroke length.

The stroke length may be at least 60.0 mm or at least 65.0 mm or at least 70.0 mm or at least 75.0 mm or at least 80.0 mm or at least 85.0 mm or at least 90.0 mm. The stroke length may be at most 600.00 mm or at most 590.00 mm or at most 580.00 mm or at most 570.00 mm or at most 560.00 mm or at most 550.00 mm or at most 540.00 mm. The stroke length may be in a range of between 60.0 mm and 600.00 mm or between 65.0 mm and 590.00 mm or between 70.0 mm and 580.00 mm or between 75.0 mm and 570.00 mm or between 80.0 mm and 560.00 mm or between 85.0 mm and 550.00 mm or between 90.0 mm and 540.00 mm.

The force may be at least 0.1 N or at least 0.3 N or at least 0.5 N or at least 0.7 N or at least 0.9 N or at least 1.1 N or at least 1.3 N or at least 1.5 N. The force may be at most 300 N or at most 290 N or at most 280 N or at most 270 N or at most 260 N or at most 250 N or at most 240 N or at most 230 N. The force may be between 0.1 N and 300 N or between 0.3 N and 290 N or between 0.5 N and 280 N or between 0.7 N and 270 N or between 0.9 N and 260 N or between 1.1 N and 250 N or between 1.3 N and 240 N or between 1.5 N and 230 N.

The progression may be 0 %. If the gas spring function is implemented by means of a pressure source constantly supplying pressure to the linear actuators instead of a valve closing the internal volume of the pressurized linear actuators, the force of the gas spring function will be constant because a pressure reducer in the supply tube between the linear actuator and the pressure source will keep the pressure constantly at the set pressure of the extended linear actuator. Hence, when pushing the movable member of the linear actuator inside, i.e., compressing the gas spring, the pressure cannot increase so that the force also remains the same.

Alternatively, the gas spring function may be implemented using a valve for closing the internal volume. Then, the progression may be at least 20 % or at least 22 % or at least 24 % or at least 26 % or at least 28 % or at least 30 %. The progression may be at most 55 % or at most 53 % or at most 51 % or at most 49 % or at most 47 % or at most 45 %. The progression may be from 20 % to 55 % or from 22 % to 53 % or from 24 % to 51 % or from 26 % to 49 % or from 28 % to 47 % or from 30 % to 45 %.

In embodiments, the at least two linear actuators may be arranged parallel to the at least two piston-cylinder arrangements. In such an embodiment, each of the piston-cylinder arrangements and their associated linear actuators are arranged side-by-side. By arranging the linear actuators parallel to the piston-cylinder arrangements, the gripper arrangement can be dimensioned very compact. Alternatively, the linear actuators may be arranged serial to the piston-cylinder arrangements, i.e., they are aligned in direction of their longitudinal axes and each linear actuator is arranged along the longitudinal axis of its associated piston-cylinder arrangement. Such a configuration may, for example, be useful for applications where a very small diameter of the gripper arrangement is preferred and/or a multitude of piston-cylinder arrangements are to be positioned very close together.

In embodiments, each suction cup may have a center point and/or each of the at least two piston-cylinder arrangements may have a longitudinal axis, and the center points may be spaced from each other by a, preferably the same, spacing distance.

Additionally or alternatively and independently thereof, the longitudinal axes may be spaced from each other by a, preferably the same, spacing distance, which spacing distance may be between 35.0 mm and 150.0 mm. The spacing distance may be at least 35.0 mm or at least 40.0 mm or at least 45.0 mm or at least 50.0 mm or at least 55.0 mm or at least 60.0 mm. The spacing distance may be at most 150.00 mm or at most 145.00 mm or at most 140.00 mm or at most 135.00 mm or at most 130.00 mm or at most 125.00 mm. The spacing distance may be in a range of between 35.0 mm and 150.00 mm or between 40.0 mm and 145.00 mm or between 45.0 mm and 140.00 mm or between 50.0 mm and 135.00 mm or between 55.0 mm and 130.00 mm or between 60.0 mm and 125.00 mm.

Such configurations result in a very compact design and, consequently, allow to easily reach even the corners of a bin for grabbing objects therefrom. At the same time, the holding points of the gripper are well distributed to ascertain a secure hold of the object for handling it.

In embodiments, the gripping arrangement may comprise at least three piston-cylinder arrangements and at least three linear actuators. For some tasks or configurations, it is advantageous to have at least three piston-cylinder arrangements and linear actuators instead of only two.

In embodiments, the suction cups of the at least two or at least three piston-cylinder arrangements may be arranged, and preferably evenly distributed, on a circle. Additionally or alternatively and independently thereof, the suction cups of the at least three piston-cylinder arrangements may be arranged triangularly.

Such configurations also result in a very compact design and, consequently, allow to easily reach even the corners of a bin for grabbing objects therefrom. At the same time, the holding points of the gripper are well distributed to ascertain a secure hold of the object for handling it.

In embodiments, the suction cups of the at least three piston-cylinder arrangements may be arranged triangularly in the shape of an equilateral triangle or in an isosceles triangle. The inventors have surprisingly found that, when using triangular arrangements, in many cases the performance of the gripping arrangements having an isosceles triangular arrangement exceeds that of equilateral triangular arrangements.

When arranging the suction cups in the shape of an isosceles triangle, the angle between the isosceles sides may be at least 20° or at least 25° or at least 30° or at least 35° or at least 40° or at least 45°. The angle may be at most 160° or at most 155° or at most 150° or at most 145° or at most 140° or at most 135°. The angle may be in a range of between 20° and 160° or between 25° and 155° or between 30° and 150° or between 35° and 145° or between 40° and 140° or between 45° and 135°.

In embodiments, at least one suction cup of the suction cups of the at least two piston-cylinder arrangements may be different in size from the other suction cups of the at least two piston-cylinder arrangements. Additionally or alternatively and independently thereof, at least one suction cup of the suction cups of the at least two piston-cylinder arrangements may be different in shape from the other suction cups of the at least two piston-cylinder arrangements. With these two options, the gripping arrangement can be optimized for objects of different weight, surface contours, and structure, such as solid body, film, or bag packaging.

The shape may be a multi-bellows suction cup having 0.5 to 5 folds, such as 0.5, 1.0, 1.5, 2.0, 2.5, 3.0, 3.5, 4.0, 4.5, or 5.0 folds. The suction cups may be made of a material comprising one or more of nitrile rubber (NBR), high density polyethylene (HDPE), polyester, and polyurethane (PU). The Shore A hardness of the suction cups, when determined according to DIN ISO 7619-1:2012-02, may be between 25 Shore A and 80 Shore A, such as 25 Shore A, 30 Shore A, 35 Shore A, 40 Shore A, 45 Shore A, 50 Shore A, 55 Shore A, 60 Shore A, 65 Shore A, 70 Shore A, 75 Shore A, or 80 Shore A. The maximum outer diameter of the suction cups may be 10-80 mm, such as 10 mm, 15 mm, 20 mm, 25 mm, 30 mm, 35 mm, 40 mm, 45 mm, 50 mm, 55 mm, 60 mm, 65 mm, 70 mm, 75 mm, or 80 mm. The single suction cups may also comprise two or more sections of different hardness and/or material and/or diameter. The suction cups may have a circular, oval, triangular, square, or rectangular cross-section. If the cross-section is not circular, the diameter of the suction cups is referring to the diameter of a circle circumscribing the cross-sectional shape.

In embodiments, the fluidic connection between each of the at least two suction cups and the corresponding cylinders connection to the corresponding negative pressure source may be tubeless. Since the piston of the piston-cylinder arrangement is designed as a hollow shaft, the fluidic connection of the suction cups at the end thereof to the negative pressure source via the cylinder can vary its length without the need of a tube or hose connection, typically a silicone tube. It may telescope "internally" instead of having a usual external tube connection which compensates the varying distance. In these embodiments, the distance of the connector at the terminal end of the cylinder to the negative pressure source remains the same while the suction cups are extended with the piston moving inside the cylinder.

In embodiments, the gripping arrangement may comprise a force control system for force-controlled grabbing of the object by at least one suction cup of the at least two piston-cylinder arrangements. To this end, each of the piston-cylinder arrangements may be equipped with a force sensor for detecting the force exerted by the piston and suction cups on the surface of a grabbed object. This may be surveilled for preventing damage by actively repositioning the piston and suction cup in case of an excessive force detected. This may also be used as a corrective measure in a function where the gripper 3D-footprint is automatically adjusted to the objects to be grabbed.

In embodiments, the force control system may be a passive force control system, preferably implemented by at least one of the at least two linear actuators, which is configured as a gas spring. In this case, the force can be adjusted by adjusting the hardness of the gas spring. Alternatively, the force control system may be an active system comprising a force sensor and means for actively setting the force level based on its readings, for example, by controlling the hardness of the gas spring.

In embodiments, at least one of the at least two piston-cylinder arrangements and/or at least one of the at least two linear actuators may be provided with a position sensor and/or a force sensor, preferably for real-time control. A particularly advantageous embodiment comprises position sensors and force sensors in the piston-cylinder arrangements and/or linear actuators and is configured for real-time control. Such an embodiment is suitable for automatic control of the gripping arrangement and advanced control functions.

In embodiments, at least one of, preferably all of, the at least two linear actuators may be configured to displace its movable member with a velocity between 0.1 m/s and 1.0 m/s. The velocity may be at least 0.1 m/s or at least 0.15 m/s or at least 0.2 m/s or at least 0.25 m/s or at least 0.3 m/s or at least 0.35 m/s. The velocity may be at most 1.0 m/s or at most 0.95 m/s or at most 0.9 m/s or at most 0.85 m/s or at most 0.8 m/s or at most 0.75 m/s. The velocity may be in a range of between 0.1 m/s and 1.0 m/s or between 0.15 m/s and 0.95 m/s or between 0.2 m/s and 0.9 m/s or between 0.25 m/s and 0.85 m/s or between 0.3 m/s and 0.8 m/s or between 0.35 m/s and 0.75 m/s.

In embodiments, the gripping arrangement may further comprise a weight measuring device, preferably a weighing cell, for determining the weight of an object grabbed by the suction cups. The information on the weight of the grabbed object can then be used to adjust the gripping arrangement to the object. This may comprise, for example, adjusting the negative pressure supplied to the single suction cups, selectively activating suction cups designed for the respective weight range, activating more or less of the suction cups, or adjusting the force level of the gripping arrangement.

### 2. Embodiments according to the second and third aspect

In embodiments according to the second and third aspect, the suction units are assigned to a linear actuator and are actively movable by them between a retracted position and an extended position. To this end, the suction units are arranged in the gripping arrangement in a movable manner comparable to the hollow pistons of the first aspect. The retracted position and the extended position between which movement occurs may be the fully retracted position and the fully extended position of the linear actuator. However, they are not required to be. The movement may also take place in a range which does not use the full possible range of the linear actuators at one or both sides thereof.

The suction units are fluidically connected to a negative pressure source, such as a vacuum pump, for applying a suction pressure to the corresponding suction cup to grab or release an object. Optionally, this may be done selectively and independently of the other suction units and their suction cups. This option is particularly advantageous as it allows for an optimized reduced pressure level as required by the respective surface of the object contacted by the suction cup or to compensate for an insufficiently airtight contact of the suction cup to the object surface.

The fluidic connection between each of the at least two suction cups and the corresponding suction units to the corresponding negative pressure source may comprise a tube or hose connection, optionally a silicone tube, for varying its length. In these embodiments, the distance of the connector at the terminal end of the suction unit to the negative pressure source changes while the suction cups and suction units are extended by the linear actuator.

The linear actuators which are assigned to the suction units include a stationary member and a movable member which are configured to actively move the suction units and corresponding suction cup between the retracted position and the extended position. This configuration may include a mechanical connection of the movable member to the assigned suction unit. In other optional configurations, a reverse arrangement having the stationary member instead of the movable member mechanically connected to the suction unit is also possible. In a further optional configuration, the linear actuator may also be effecting the active movement of the suction unit only indirectly, i.e., it is not directly mechanically connected to the suction unit but acts through intermediate members or on a supporting structure. The configuration may particularly be chosen dependent on the type of linear actuator used.

The distance between the retracted position and the extended position of the linear actuator is between 60.0 mm and 450.0 mm. The distance may be in a range of between 60.0 mm and 450.0 mm or between 65.0 mm and 435.0 mm or between 70.0 mm and 420.0 mm or between 75.0 mm and 405.0 mm or between 80.0 mm and 390.0 mm or between 85.0 mm and 375.0 mm or between 90.0 mm and 360.0 mm or between 100.0 mm and 350.0 mm. The distance may be at least 60.0 mm or at least 65.0 mm or at least 70.0 mm or at least 75.0 mm or at least 80.0 mm or at least 85.0 mm or at least 90.0 mm or at least 100.0 mm. The distance may be at most 450.0 mm or at most 435.0 mm or at most 420.0 mm or at most 405.0 mm or at most 390.0 mm or at most 375.0 mm or at most 360.0 mm or at most 350.0 mm.

A ratio r between the fully retracted length lᵣₑₜ and the fully extended length lₑₓₜ defined as r = (lₑₓₜ / lᵣₑₜ) * 100 [%] may be at least 105 % or at least 110 % or at least 115 % or at least 120 % or at least 125 %. The ratio r may be at most 200 % or at most 195 % or at most 190 % or at most 185 % or at most 180 %. The ratio r may be in a range of between 105 % and 200 % or between 110 % and 195 % or between 115 % and 190 % or between 120 % and 185 % or between 125 % and 180 %.

Since the linear actuators can actively move their assigned suction unit with its suction cup independently of the other suction units and suction cups, it is possible to create different gripper 3D-footprints, i.e., giving the gripper a height profile matching the surface of the objects to be gripped by specifically extending or retracting single suction cups. In particular, in combination with the large extension ratio of the linear actuators and assigned suction units, the actively adjusted gripping arrangement is suitable for a large variety of objects and, consequently, requires less changes between different gripping arrangements tailored to specific objects. At the same time, the holding force of the gripper is optimized because all suction cups of the gripping arrangement can be used as opposed to an arrangement where they are arranged fixedly in a single plane. The suction cups are individually controllable, i.e., individually and independent from each other extendable and retractable and/or can be individually and independent from each other pressurized.

In embodiments, each of the at least two linear actuators may be configured to move the assigned suction unit and corresponding suction cup of the at least two suction units continuously between the retracted position and the extended position. Alternatively, the linear actuators may be configured to move the assigned suction unit and corresponding suction cup to multiple intermediate positions between the retracted position and the extended position. When using a sufficiently large number of intermediate positions, the variability is approximately the same as when providing continuous motion. For example, linear actuators employing a stepper motor can be used for moving to multiple intermediate positions.

In embodiments, the movable member may be mechanically connected to the assigned suction unit of the at least two suction units to actively move the assigned suction unit and corresponding suction cup between the retracted position, at least one intermediate position, and the extended position independent of the other suction units and suction cups of the at least two suction units. In other optional configurations of this embodiment, a reverse arrangement having the stationary member instead of the movable member mechanically connected to the suction unit is also possible. In a further optional configuration of this embodiment, the linear actuator may also be effecting the active movement of the suction unit only indirectly, i.e., it is not directly mechanically connected to the suction unit but acts through intermediate members or on a supporting structure.

In embodiments, the gripping arrangement may comprise a closed-loop position control system for selectively controlling a position of each suction unit and corresponding suction cup of the at least two suction units. This closed-loop position control system will allow for an exact positioning of the single suction unit and give the control system of the robot device precise status information on the present configuration of the gripper arrangement. To this end, each of the suction units may be equipped with a position sensor for detecting the position of suction unit.

In embodiments, at least one of, preferably all of, the at least two linear actuators may be a pneumatic cylinder arrangement. Alternatively, the linear actuators may be, for example, a hydraulic cylinder arrangement, a linear motor, a belt drive actuator, a linear ball screw actuator, a lead screw actuator, or a spindle arrangement. A pneumatic cylinder arrangement has the advantage of very fast action times whereas the electric motor and actuator alternatives may provide very high positioning precision.

In embodiments, the pneumatic cylinder arrangement may be configured to act as a gas spring and/or cushioning element when inactive. Another advantage of the pneumatic cylinder arrangements is that they simultaneously can be used as a gas spring or damping element towards a force exerted by an object grabbed by the corresponding suction cup. This will allow for a passive force regulation of the gripping arrangement to prevent damage of the object to be handled.

In embodiments, the gripping arrangement may further comprise a spring member, a resilient member, and/or an elastic member arranged between the suction cup and the suction unit and/or between the linear actuator and its mounting point. Where the linear actuators are no pneumatic cylinder arrangements or do not comprise the configuration as a gas spring and/or cushioning element when inactive, these alternative means can be used for achieving the passive force regulation of the gripping arrangement to prevent damage of the object to be handled. They may also be implemented in addition to this configuration as a double failsafe feature.

In embodiments, at least one of, preferably all of, the at least two linear actuators may be selectively lockable in a selected position between the retracted position and the extended position. They may also be lockable in the retracted position and the extended position. With this function, it can be prevented that the suction units with their suction cups inadvertently move during the grabbing action.

In embodiments, at least one of, preferably all of, the at least two linear actuators
- has a stroke length between 60.0 mm and 600.00 mm; and/or
- can apply a force between 0.1 N and 300 N; and/or
- has a progression of 0 % or of 20 % to 55 % relating to the complete stroke length.

The stroke length may be at least 60.0 mm or at least 65.0 mm or at least 70.0 mm or at least 75.0 mm or at least 80.0 mm or at least 85.0 mm or at least 90.0 mm. The stroke length may be at most 600.00 mm or at most 590.00 mm or at most 580.00 mm or at most 570.00 mm or at most 560.00 mm or at most 550.00 mm or at most 540.00 mm. The stroke length may be in a range of between 60.0 mm and 600.00 mm or between 65.0 mm and 590.00 mm or between 70.0 mm and 580.00 mm or between 75.0 mm and 570.00 mm or between 80.0 mm and 560.00 mm or between 85.0 mm and 550.00 mm or between 90.0 mm and 540.00 mm.

The force may be at least 0.1 N or at least 0.3 N or at least 0.5 N or at least 0.7 N or at least 0.9 N or at least 1.1 N or at least 1.3 N or at least 1.5 N. The force may be at most 300 N or at most 290 N or at most 280 N or at most 270 N or at most 260 N or at most 250 N or at most 240 N or at most 230 N. The force may be between 0.1 N and 300 N or between 0.3 N and 290 N or between 0.5 N and 280 N or between 0.7 N and 270 N or between 0.9 N and 260 N or between 1.1 N and 250 N or between 1.1 N and 240 N or between 1.5 N and 230 N.

The progression may be 0 %. If the gas spring function is implemented by means of a pressure source constantly supplying pressure to the linear actuators instead of a valve closing the internal volume of the pressurized linear actuators, the force of the gas spring function will be constant because a pressure reducer in the supply tube between the linear actuator and the pressure source will keep the pressure constantly at the set pressure of the extended linear actuator. Hence, when pushing the movable member of the linear actuator inside, i.e., compressing the gas spring, the pressure cannot increase so that the force also remains the same.

Alternatively, the gas spring function may be implemented using a valve for closing the internal volume. Then, the progression may be at least 20 % or at least 22 % or at least 24 % or at least 26 % or at least 28 % or at least 30 %. The progression may be at most 55 % or at most 53 % or at most 51 % or at most 49 % or at most 47 % or at most 45 %. The progression may be from 20 % to 55 % or from 22 % to 53 % or from 24 % to 51 % or from 26 % to 49 % or from 28 % to 47 % or from 30 % to 45 %.

In embodiments, the at least two linear actuators may be arranged parallel to the at least two suction units. In such an embodiment, each of the suction units and their associated linear actuators are arranged side-by-side. By arranging the linear actuators parallel to the suction units, the gripper arrangement can be dimensioned very compact. Alternatively, the linear actuators may be arranged serial to the suction units, i.e., they are aligned in direction of their longitudinal axes and each linear actuator is arranged along the longitudinal axis of its associated suction unit. Such a configuration may, for example, be useful for applications where a very small diameter of the gripper arrangement is preferred and/or a multitude of suction units are to be positioned very close together.

In embodiments, each suction cup may have a center point and/or each of the at least two suction units may have a longitudinal axis, and the center points may be spaced from each other by a, preferably the same, spacing distance.

Additionally or alternatively and independently thereof, the longitudinal axes may be spaced from each other by a, preferably the same, spacing distance, which spacing distance may be between 35.0 mm and 150.0 mm. The spacing distance may be at least 35.0 mm or at least 40.0 mm or at least 45.0 mm or at least 50.0 mm or at least 55.0 mm or at least 60.0 mm. The spacing distance may be at most 150.00 mm or at most 145.00 mm or at most 140.00 mm or at most 135.00 mm or at most 130.00 mm or at most 125.00 mm. The spacing distance may be in a range of between 35.0 mm and 150.00 mm or between 40.0 mm and 145.00 mm or between 45.0 mm and 140.00 mm or between 50.0 mm and 135.00 mm or between 55.0 mm and 130.00 mm or between 60.0 mm and 125.00 mm.

Such configurations result in a very compact design and, consequently, allow to easily reach even the corners of a bin for grabbing objects therefrom. At the same time, the holding points of the gripper are well distributed to ascertain a secure hold of the object for handling it.

In embodiments, the gripping arrangement may comprise at least three suction units and at least three linear actuators. For some tasks or configurations, it is advantageous to have at least three suction units and linear actuators instead of only two.

In embodiments, the suction cups of the at least two or at least three suction units may be arranged, and preferably evenly distributed, on a circle. Additionally or alternatively and independently thereof, the suction cups of the at least three suction units may be arranged triangularly.

Such configurations also result in a very compact design and, consequently, allow to easily reach even the corners of a bin for grabbing objects therefrom. At the same time, the holding points of the gripper are well distributed to ascertain a secure hold of the object for handling it.

In embodiments, the suction cups of the at least three suction units may be arranged triangularly in the shape of an equilateral triangle or in an isosceles triangle. The inventors have surprisingly found that, when using triangular arrangements, in many cases the performance of the gripping arrangements having an isosceles triangular arrangement exceeds that of equilateral triangular arrangements.

When arranging the suction cups in the shape of an isosceles triangle, the angle between the isosceles sides may be at least 20° or at least 25° or at least 30° or at least 35° or at least 40° or at least 45°. The angle may be at most 160° or at most 155° or at most 150° or at most 145° or at most 140° or at most 135°. The angle may be in a range of between 20° and 160° or between 25° and 155° or between 30° and 150° or between 35° and 145° or between 40° and 140° or between 45° and 135°.

In embodiments, at least one suction cup of the suction cups of the at least two suction units may be different in size from the other suction cups of the at least two suction units. Additionally or alternatively and independently thereof, at least one suction cup of the suction cups of the at least two suction units may be different in shape from the other suction cups of the at least two suction units. With these two options, the gripping arrangement can be optimized for objects of different weight, surface contours, and structure, such as solid body, film, or bag packaging.

The shape may be a multi-bellows suction cup having 0.5 to 5 folds, such as 0.5, 1.0, 1.5, 2.0, 2.5, 3.0, 3.5, 4.0, 4.5, or 5.0 folds. The suction cups may be made of a material comprising one or more of nitrile rubber (NBR), high density polyethylene (HDPE), polyester, and polyurethane (PU). The Shore A hardness of the suction cups, when determined according to DIN ISO 7619-1:2012-02, may be between 25 Shore A and 80 Shore A, such as 25 Shore A, 30 Shore A, 35 Shore A, 40 Shore A, 45 Shore A, 50 Shore A, 55 Shore A, 60 Shore A, 65 Shore A, 70 Shore A, 75 Shore A, or 80 Shore A. The maximum outer diameter of the suction cups may be 10-80 mm, such as 10 mm, 15 mm, 20 mm, 25 mm, 30 mm, 35 mm, 40 mm, 45 mm, 50 mm, 55 mm, 60 mm, 65 mm, 70 mm, 75 mm, or 80 mm. The single suction cups may also comprise two or more sections of different hardness and/or material and/or diameter. The suction cups may have a circular, oval, triangular, square, or rectangular cross-section. If the cross-section is not circular, the diameter of the suction cups is referring to the diameter of a circle circumscribing the cross-sectional shape.

In embodiments, the gripping arrangement may comprise a force control system for force-controlled grabbing of the object by at least one suction cup of the at least two suction units. To this end, each of the suction units may be equipped with a force sensor for detecting the force exerted by the suction unit and suction cups on the surface of a grabbed object. This may be surveilled for preventing damage by actively repositioning the suction unit and suction cup in case of an excessive force detected. This may also be used as a corrective measure in a function where the gripper 3D-footprint is automatically adjusted to the objects to be grabbed.

In embodiments, the force control system may be a passive force control system, preferably implemented by at least one of the at least two linear actuators, which is configured as a gas spring. In this case, the force can be adjusted by adjusting the hardness of the gas spring. An alternative version of a passive force control system may comprise the implementation of a centrally installed flexibility, such as a spring element, between the mounting plate of the gripping arrangement and the robotic arm. Alternatively, the force control system may be an active system comprising a force sensor and means for actively setting the force level based on its readings, for example, by controlling the hardness of the gas spring.

In embodiments, at least one of the at least two suction units and/or at least one of the at least two linear actuators may be provided with a position sensor and/or a force sensor, preferably for real-time control. A particularly advantageous embodiment comprises position sensors and force sensors in the suction units and/or linear actuators and is configured for real-time control. Such an embodiment is suitable for automatic control of the gripping arrangement and advanced control functions.

In embodiments, at least one of, preferably all of, the at least two linear actuators may be configured to displace its movable member with a velocity between 0.1 m/s and 1.0 m/s. The velocity may be at least 0.1 m/s or at least 0.15 m/s or at least 0.2 m/s or at least 0.25 m/s or at least 0.3 m/s or at least 0.35 m/s. The velocity may be at most 1.0 m/s or at most 0.95 m/s or at most 0.9 m/s or at most 0.85 m/s or at most 0.8 m/s or at most 0.75 m/s. The velocity may be in a range of between 0.1 m/s and 1.0 m/s or between 0.15 m/s and 0.95 m/s or between 0.2 m/s and 0.9 m/s or between 0.25 m/s and 0.85 m/s or between 0.3 m/s and 0.8 m/s or between 0.35 m/s and 0.75 m/s.

In embodiments, the gripping arrangement may further comprise a weight measuring device, preferably a weighing cell, for determining the weight of an object grabbed by the suction cups. The information on the weight of the grabbed object can then be used to adjust the gripping arrangement to the object. This may comprise, for example, adjusting the negative pressure supplied to the single suction cups, selectively activating suction cups designed for the respective weight range, activating more or less of the suction cups, or adjusting the force level of the gripping arrangement.

### 3. Embodiments according to the fourth aspect

In embodiments according to the fourth aspect, the piston-cylinder arrangements have a cylinder and a piston relatively movable thereto between a retracted position and an extended position. The cylinder and piston are actively movable relative to each other by means of the linear actuator. The retracted position and the extended position between which movement occurs may be the fully retracted position and the fully extended position of the piston in the cylinder. However, they are not required to be. The movement may also take place in a range which does not use the full possible range of the piston-cylinder arrangement at one or both sides thereof.

The cylinder is fluidically connected to a negative pressure source, such as a vacuum pump, for applying a suction pressure to the corresponding suction cup via the cylinder and the piston to grab or release an object. Optionally, this may be done selectively and independently of the other piston-cylinder arrangements and their suction cups. This option is particularly advantageous as it allows for an optimized reduced pressure level as required by the respective surface of the object contacted by the suction cup or to compensate for an insufficiently airtight contact of the suction cup to the object surface.

The linear actuators which are assigned to the piston-cylinder arrangements include a stationary member and a movable member which are configured to actively move the piston and corresponding suction cup of the piston-cylinder arrangements between the retracted position and the extended position. This configuration may include a mechanical connection of the movable member to the piston of the assigned piston-cylinder arrangement. In other optional configurations, a reverse arrangement having the stationary member instead of the movable member mechanically connected to the piston is also possible. In a further optional configuration, the linear actuator may also be effecting the active movement of the piston only indirectly, i.e., it is not directly mechanically connected to the piston but acts through intermediate members or on a supporting structure. The configuration may particularly be chosen dependent on the type of linear actuator used.

The distance between the retracted position and the extended position of the piston-cylinder arrangement may be between 60.0 mm and 450.0 mm. The distance may be in a range of between 60.0 mm and 450.0 mm or between 65.0 mm and 435.0 mm or between 70.0 mm and 420.0 mm or between 75.0 mm and 405.0 mm or between 80.0 mm and 390.0 mm or between 85.0 mm and 375.0 mm or between 90.0 mm and 360.0 mm or between 100.0 mm and 350.0 mm. The distance may be at least 60.0 mm or at least 65.0 mm or at least 70.0 mm or at least 75.0 mm or at least 80.0 mm or at least 85.0 mm or at least 90.0 mm or at least 100.0 mm. The distance may be at most 450.0 mm or at most 435.0 mm or at most 420.0 mm or at most 405.0 mm or at most 390.0 mm or at most 375.0 mm or at most 360.0 mm or at most 350.0 mm.

A ratio r between the fully retracted length lᵣₑₜ and the fully extended length lₑₓₜ defined as r = (lₑₓₜ / lᵣₑₜ) * 100 [%] may be at least 105 % or at least 110 % or at least 115 % or at least 120 % or at least 125 %. The ratio r may be at most 200 % or at most 195 % or at most 190 % or at most 185 % or at most 180 %. The ratio r may be in a range of between 105 % and 200 % or between 110 % and 195 % or between 115 % and 190 % or between 120 % and 185 % or between 125 % and 180 %.

Since the linear actuators can actively move their assigned piston with its suction cup independently of the other pistons and suction cups of the piston-cylinder arrangements, it is possible to create different gripper 3D-footprints, i.e., giving the gripper a height profile matching the surface of the objects to be gripped by specifically extending or retracting single suction cups. In particular, in combination with the large extension ratio of the piston-cylinder arrangement, the actively adjusted gripping arrangement is suitable for a large variety of objects and, consequently, requires less changes between different gripping arrangements tailored to specific objects. At the same time, the holding force of the gripper is optimized because all suction cups of the gripping arrangement can be used as opposed to an arrangement where they are arranged fixedly in a single plane. The suction cups are individually controllable, i.e., individually and independent from each other extendable and retractable and/or can be individually and independent from each other pressurized.

The spacing distance by which the center points and/or the longitudinal axes are spaced from each other is between 35.0 mm and 150.0 mm. The spacing distance may be at least 35.0 mm or at least 40.0 mm or at least 45.0 mm or at least 50.0 mm or at least 55.0 mm or at least 60.0 mm. The spacing distance may be at most 150.00 mm or at most 145.00 mm or at most 140.00 mm or at most 135.00 mm or at most 130.00 mm or at most 125.00 mm. The spacing distance may be in a range of between 35.0 mm and 150.00 mm or between 40.0 mm and 145.00 mm or between 45.0 mm and 140.00 mm or between 50.0 mm and 135.00 mm or between 55.0 mm and 130.00 mm or between 60.0 mm and 125.00 mm.

Additionally or alternatively thereto, the suction cups of the at least three piston-cylinder arrangements are arranged, and preferably evenly distributed, on a circle. Additionally or alternatively and independently thereof, the suction cups of the at least three piston-cylinder arrangements may be arranged triangularly.

Such configurations result in a very compact design and, consequently, allow to easily reach even the corners of a bin for grabbing objects therefrom. At the same time, the holding points of the gripper are well distributed to ascertain a secure hold of the object for handling it.

In embodiments, each of the at least three linear actuators may be configured to move the assigned piston and corresponding suction cup of the at least three piston-cylinder arrangements continuously between the retracted position and the extended position. Alternatively, the linear actuators may be configured to move the assigned piston and corresponding suction cup to multiple intermediate positions between the retracted position and the extended position. When using a sufficiently large number of intermediate positions, the variability is approximately the same as when providing continuous motion. For example, linear actuators employing a stepper motor can be used for moving to multiple intermediate positions.

In embodiments, the movable member may be mechanically connected to the piston of the assigned one of the at least three piston-cylinder arrangements to actively move the assigned piston and corresponding suction cup between the retracted position, at least one intermediate position, and the extended position independent of the other pistons and suction cups of the at least three piston-cylinder arrangements. In other optional configurations of this embodiment, a reverse arrangement having the stationary member instead of the movable member mechanically connected to the piston is also possible. In a further optional configuration of this embodiment, the linear actuator may also be effecting the active movement of the piston only indirectly, i.e., it is not directly mechanically connected to the piston but acts through intermediate members or on a supporting structure.

In embodiments, the gripping arrangement may comprise a closed-loop position control system for selectively controlling a position of each piston and corresponding suction cup of the at least three piston-cylinder arrangements. This closed-loop position control system will allow for an exact positioning of the single pistons and give the control system of the robot device precise status information on the present configuration of the gripper arrangement. To this end, each of the piston-cylinder arrangements may be equipped with a position sensor for detecting the position of the piston within the cylinder.

In embodiments, at least one of, preferably all of, the at least three linear actuators may be a pneumatic cylinder arrangement. Alternatively, the linear actuators may be, for example, a hydraulic cylinder arrangement, a linear motor, a belt drive actuator, a linear ball screw actuator, a lead screw actuator, or a spindle arrangement. A pneumatic cylinder arrangement has the advantage of very fast action times whereas the electric motor and actuator alternatives may provide very high positioning precision.

In embodiments, the pneumatic cylinder arrangement may be configured to act as a gas spring and/or cushioning element when inactive. Another advantage of the pneumatic cylinder arrangements is that they simultaneously can be used as a gas spring or damping element towards a force exerted by an object grabbed by the corresponding suction cup. This will allow for a passive force regulation of the gripping arrangement to prevent damage of the object to be handled.

In embodiments, the gripping arrangement may further comprise a spring member, a resilient member, and/or an elastic member arranged between the suction cup and the piston and/or between the linear actuator and its mounting point. Where the linear actuators are no pneumatic cylinder arrangements or do not comprise the configuration as a gas spring and/or cushioning element when inactive, these alternative means can be used for achieving the passive force regulation of the gripping arrangement to prevent damage of the object to be handled. They may also be implemented in addition to this configuration as a double failsafe feature.

In embodiments, at least one of, preferably all of, the at least three linear actuators may be selectively lockable in a selected position between the retracted position and the extended position. They may also be lockable in the retracted position and the extended position. With this function, it can be prevented that the pistons with their suction cups inadvertently move during the grabbing action.

In embodiments, at least one of, preferably all of, the at least three linear actuators
- has a stroke length between 60.0 mm and 600.00 mm; and/or
- can apply a force between 0.1 N and 300 N; and/or
- has a progression of 0 % or of 20 % to 55 % relating to the complete stroke length.

The stroke length may be at least 60.0 mm or at least 65.0 mm or at least 70.0 mm or at least 75.0 mm or at least 80.0 mm or at least 85.0 mm or at least 90.0 mm. The stroke length may be at most 600.00 mm or at most 590.00 mm or at most 580.00 mm or at most 570.00 mm or at most 560.00 mm or at most 550.00 mm or at most 540.00 mm. The stroke length may be in a range of between 60.0 mm and 600.00 mm or between 65.0 mm and 590.00 mm or between 70.0 mm and 580.00 mm or between 75.0 mm and 570.00 mm or between 80.0 mm and 560.00 mm or between 85.0 mm and 550.00 mm or between 90.0 mm and 540.00 mm.

The force may be at least 0.1 N or at least 0.3 N or at least 0.5 N or at least 0.7 N or at least 0.9 N or at least 1.1 N or at least 1.3 N or at least 1.5 N. The force may be at most 300 N or at most 290 N or at most 280 N or at most 270 N or at most 260 N or at most 250 N or at most 240 N or at most 230 N. The force may be between 0.1 N and 300 N or between 0.3 N and 290 N or between 0.5 N and 280 N or between 0.7 N and 270 N or between 0.9 N and 260 N or between 1.1 N and 250 N or between 1.3 N and 240 N or between 1.5 N and 230 N.

The progression may be 0 %. If the gas spring function is implemented by means of a pressure source constantly supplying pressure to the linear actuators instead of a valve closing the internal volume of the pressurized linear actuators, the force of the gas spring function will be constant because a pressure reducer in the supply tube between the linear actuator and the pressure source will keep the pressure constantly at the set pressure of the extended linear actuator. Hence, when pushing the movable member of the linear actuator inside, i.e., compressing the gas spring, the pressure cannot increase so that the force also remains the same.

Alternatively, the gas spring function may be implemented using a valve for closing the internal volume. Then, the progression may be at least 20 % or at least 22 % or at least 24 % or at least 26 % or at least 28 % or at least 30 %. The progression may be at most 55 % or at most 53 % or at most 51 % or at most 49 % or at most 47 % or at most 45 %. The progression may be from 20 % to 55 % or from 22 % to 53 % or from 24 % to 51 % or from 26 % to 49 % or from 28 % to 47 % or from 30 % to 45 %.

In embodiments, the at least three linear actuators may be arranged parallel to the at least three piston-cylinder arrangements. In such an embodiment, each of the piston-cylinder arrangements and their associated linear actuators are arranged side-by-side. By arranging the linear actuators parallel to the piston-cylinder arrangements, the gripper arrangement can be dimensioned very compact. Alternatively, the linear actuators may be arranged serial to the piston-cylinder arrangements, i.e., they are aligned in direction of their longitudinal axes and each linear actuator is arranged along the longitudinal axis of its associated piston-cylinder arrangement. Such a configuration may, for example, be useful for applications where a very small diameter of the gripper arrangement is preferred and/or a multitude of piston-cylinder arrangements are to be positioned very close together.

In embodiments, the suction cups of the at least three piston-cylinder arrangements may be arranged triangularly in the shape of an equilateral triangle or in an isosceles triangle. The inventors have surprisingly found that, when using triangular arrangements, in many cases the performance of the gripping arrangements having an isosceles triangular arrangement exceeds that of equilateral triangular arrangements.

When arranging the suction cups in the shape of an isosceles triangle, the angle between the isosceles sides may be at least 20° or at least 25° or at least 30° or at least 35° or at least 40° or at least 45°. The angle may be at most 160° or at most 155° or at most 150° or at most 145° or at most 140° or at most 135°. The angle may be in a range of between 20° and 160° or between 25° and 155° or between 30° and 150° or between 35° and 145° or between 40° and 140° or between 45° and 135°.

In embodiments, at least one suction cup of the suction cups of the at least three piston-cylinder arrangements may be different in size from the other suction cups of the at least three piston-cylinder arrangements. Additionally or alternatively and independently thereof, at least one suction cup of the suction cups of the at least three piston-cylinder arrangements may be different in shape from the other suction cups of the at least three piston-cylinder arrangements. With these two options, the gripping arrangement can be optimized for objects of different weight, surface contours, and structure, such as solid body, film, or bag packaging.

The shape may be a multi-bellows suction cup having 0.5 to 5 folds, such as 0.5, 1.0, 1.5, 2.0, 2.5, 3.0, 3.5, 4.0, 4.5, or 5.0 folds. The suction cups may be made of a material comprising one or more of nitrile rubber (NBR), high density polyethylene (HDPE), polyester, and polyurethane (PU). The Shore A hardness of the suction cups, when determined according to DIN ISO 7619-1:2012-02, may be between 25 Shore A and 80 Shore A, such as 25 Shore A, 30 Shore A, 35 Shore A, 40 Shore A, 45 Shore A, 50 Shore A, 55 Shore A, 60 Shore A, 65 Shore A, 70 Shore A, 75 Shore A, or 80 Shore A. The maximum outer diameter of the suction cups may be 10-80 mm, such as 10 mm, 15 mm, 20 mm, 25 mm, 30 mm, 35 mm, 40 mm, 45 mm, 50 mm, 55 mm, 60 mm, 65 mm, 70 mm, 75 mm, or 80 mm. The single suction cups may also comprise two or more sections of different hardness and/or material and/or diameter. The suction cups may have a circular, oval, triangular, square, or rectangular cross-section. If the cross-section is not circular, the diameter of the suction cups is referring to the diameter of a circle circumscribing the cross-sectional shape.

In embodiments, the fluidic connection between each of the at least three suction cups and the corresponding cylinders connection to the corresponding negative pressure source may be tubeless. Since the piston of the piston-cylinder arrangement is designed as a hollow shaft, the fluidic connection of the suction cups at the end thereof to the negative pressure source via the cylinder can vary its length without the need of a tube or hose connection, typically a silicone tube. It may telescope "internally" instead of having a usual external tube connection which compensates the varying distance. In these embodiments, the distance of the connector at the terminal end of the cylinder to the negative pressure source remains the same while the suction cups are extended with the piston moving inside the cylinder.

In embodiments, the gripping arrangement may comprise a force control system for force-controlled grabbing of the object by at least one suction cup of the at least three piston-cylinder arrangements. To this end, each of the piston-cylinder arrangements may be equipped with a force sensor for detecting the force exerted by the piston and suction cups on the surface of a grabbed object. This may be surveilled for preventing damage by actively repositioning the piston and suction cup in case of an excessive force detected. This may also be used as a corrective measure in a function where the gripper 3D-footprint is automatically adjusted to the objects to be grabbed.

In embodiments, the force control system may be a passive force control system, preferably implemented by at least one of the at least three linear actuators, which is configured as a gas spring. In this case, the force can be adjusted by adjusting the hardness of the gas spring. Alternatively, the force control system may be an active system comprising a force sensor and means for actively setting the force level based on its readings, for example, by controlling the hardness of the gas spring.

In embodiments, at least one of the at least three piston-cylinder arrangements and/or at least one of the at least three linear actuators may be provided with a position sensor and/or a force sensor, preferably for real-time control. A particularly advantageous embodiment comprises position sensors and force sensors in the piston-cylinder arrangements and/or linear actuators and is configured for real-time control. Such an embodiment is suitable for automatic control of the gripping arrangement and advanced control functions.

In embodiments, at least one of, preferably all of, the at least three linear actuators may be configured to displace its movable member with a velocity between 0.1 m/s and 1.0 m/s. The velocity may be at least 0.1 m/s or at least 0.15 m/s or at least 0.2 m/s or at least 0.25 m/s or at least 0.3 m/s or at least 0.35 m/s. The velocity may be at most 1.0 m/s or at most 0.95 m/s or at most 0.9 m/s or at most 0.85 m/s or at most 0.8 m/s or at most 0.75 m/s. The velocity may be in a range of between 0.1 m/s and 1.0 m/s or between 0.15 m/s and 0.95 m/s or between 0.2 m/s and 0.9 m/s or between 0.25 m/s and 0.85 m/s or between 0.3 m/s and 0.8 m/s or between 0.35 m/s and 0.75 m/s.

In embodiments, the gripping arrangement may further comprise a weight measuring device, preferably a weighing cell, for determining the weight of an object grabbed by the suction cups. The information on the weight of the grabbed object can then be used to adjust the gripping arrangement to the object. This may comprise, for example, adjusting the negative pressure supplied to the single suction cups, selectively activating suction cups designed for the respective weight range, activating more or less of the suction cups, or adjusting the force level of the gripping arrangement.

### 4. Embodiments according to the fifth aspect

In embodiments according to the fifth aspect, the piston-cylinder arrangements have a cylinder and a piston relatively movable thereto between a retracted position and an extended position. The cylinder and piston are actively movable relative to each other by means of the linear actuator. The retracted position and the extended position between which movement occurs may be the fully retracted position and the fully extended position of the piston in the cylinder. However, they are not required to be. The movement may also take place in a range which does not use the full possible range of the piston-cylinder arrangement at one or both sides thereof.

The cylinder is fluidically connected to a negative pressure source, such as a vacuum pump, for applying a suction pressure to the corresponding suction cup via the cylinder and the piston to grab or release an object. Optionally, this may be done selectively and independently of the other piston-cylinder arrangements and their suction cups. This option is particularly advantageous as it allows for an optimized reduced pressure level as required by the respective surface of the object contacted by the suction cup or to compensate for an insufficiently airtight contact of the suction cup to the object surface.

At least one suction cup of the suction cups of the at least three piston-cylinder arrangements is different in size from the other suction cups of the at least three piston-cylinder arrangements. Additionally or alternatively and independently thereof, at least one suction cup of the suction cups of the at least three piston-cylinder arrangements is different in shape from the other suction cups of the at least three piston-cylinder arrangements. With these two options, the gripping arrangement can be optimized for objects of different weight, surface contours, and structure, such as solid body, film, or bag packaging.

The shape may be a multi-bellows suction cup having 0.5 to 5 folds, such as 0.5, 1.0, 1.5, 2.0, 2.5, 3.0, 3.5, 4.0, 4.5, or 5.0 folds. The suction cups may be made of a material comprising one or more of nitrile rubber (NBR), high density polyethylene (HDPE), polyester, and polyurethane (PU). The Shore A hardness of the suction cups, when determined according to DIN ISO 7619-1:2012-02, may be between 25 Shore A and 80 Shore A, such as 25 Shore A, 30 Shore A, 35 Shore A, 40 Shore A, 45 Shore A, 50 Shore A, 55 Shore A, 60 Shore A, 65 Shore A, 70 Shore A, 75 Shore A, or 80 Shore A. The maximum outer diameter of the suction cups may be 10-80 mm, such as 10 mm, 15 mm, 20 mm, 25 mm, 30 mm, 35 mm, 40 mm, 45 mm, 50 mm, 55 mm, 60 mm, 65 mm, 70 mm, 75 mm, or 80 mm. The single suction cups may also comprise two or more sections of different hardness and/or material and/or diameter. The suction cups may have a circular, oval, triangular, square, or rectangular cross-section. If the cross-section is not circular, the diameter of the suction cups is referring to the diameter of a circle circumscribing the cross-sectional shape.

The linear actuators which are assigned to the piston-cylinder arrangements include a stationary member and a movable member which are configured to actively move the piston and corresponding suction cup of the piston-cylinder arrangements between the retracted position and the extended position. This configuration may include a mechanical connection of the movable member to the piston of the assigned piston-cylinder arrangement. In other optional configurations, a reverse arrangement having the stationary member instead of the movable member mechanically connected to the piston is also possible. In a further optional configuration, the linear actuator may also be effecting the active movement of the piston only indirectly, i.e., it is not directly mechanically connected to the piston but acts through intermediate members or on a supporting structure. The configuration may particularly be chosen dependent on the type of linear actuator used.

The distance between the retracted position and the extended position of the piston-cylinder arrangement may be between 60.0 mm and 450.0 mm. The distance may be in a range of between 60.0 mm and 450.0 mm or between 65.0 mm and 435.0 mm or between 70.0 mm and 420.0 mm or between 75.0 mm and 405.0 mm or between 80.0 mm and 390.0 mm or between 85.0 mm and 375.0 mm or between 90.0 mm and 360.0 mm or between 100.0 mm and 350.0 mm. The distance may be at least 60.0 mm or at least 65.0 mm or at least 70.0 mm or at least 75.0 mm or at least 80.0 mm or at least 85.0 mm or at least 90.0 mm or at least 100.0 mm. The distance may be at most 450.0 mm or at most 435.0 mm or at most 420.0 mm or at most 405.0 mm or at most 390.0 mm or at most 375.0 mm or at most 360.0 mm or at most 350.0 mm.

A ratio r between the fully retracted length lᵣₑₜ and the fully extended length lₑₓₜ defined as r = (lₑₓₜ / lᵣₑₜ) * 100 [%] may be at least 105 % or at least 110 % or at least 115 % or at least 120 % or at least 125 %. The ratio r may be at most 200 % or at most 195 % or at most 190 % or at most 185 % or at most 180 %. The ratio r may be in a range of between 105 % and 200 % or between 110 % and 195 % or between 115 % and 190 % or between 120 % and 185 % or between 125 % and 180 %.

Since the linear actuators can actively move their assigned piston with its suction cup independently of the other pistons and suction cups of the piston-cylinder arrangements, it is possible to create different gripper 3D-footprints, i.e., giving the gripper a height profile matching the surface of the objects to be gripped by specifically extending or retracting single suction cups. In particular, in combination with the large extension ratio of the piston-cylinder arrangement, the actively adjusted gripping arrangement is suitable for a large variety of objects and, consequently, requires less changes between different gripping arrangements tailored to specific objects. At the same time, the holding force of the gripper is optimized because all suction cups of the gripping arrangement can be used as opposed to an arrangement where they are arranged fixedly in a single plane. The suction cups are individually controllable, i.e., individually and independent from each other extendable and retractable and/or can be individually and independent from each other pressurized.

In embodiments, each of the at least three linear actuators may be configured to move the assigned piston and corresponding suction cup of the at least three piston-cylinder arrangements continuously between the retracted position and the extended position. Alternatively, the linear actuators may be configured to move the assigned piston and corresponding suction cup to multiple intermediate positions between the retracted position and the extended position. When using a sufficiently large number of intermediate positions, the variability is approximately the same as when providing continuous motion. For example, linear actuators employing a stepper motor can be used for moving to multiple intermediate positions.

In embodiments, the movable member may be mechanically connected to the piston of the assigned one of the at least three piston-cylinder arrangements to actively move the assigned piston and corresponding suction cup between the retracted position, at least one intermediate position, and the extended position independent of the other pistons and suction cups of the at least three piston-cylinder arrangements. In other optional configurations of this embodiment, a reverse arrangement having the stationary member instead of the movable member mechanically connected to the piston is also possible. In a further optional configuration of this embodiment, the linear actuator may also be effecting the active movement of the piston only indirectly, i.e., it is not directly mechanically connected to the piston but acts through intermediate members or on a supporting structure.

In embodiments, the gripping arrangement may comprise a closed-loop position control system for selectively controlling a position of each piston and corresponding suction cup of the at least three piston-cylinder arrangements. This closed-loop position control system will allow for an exact positioning of the single pistons and give the control system of the robot device precise status information on the present configuration of the gripper arrangement. To this end, each of the piston-cylinder arrangements may be equipped with a position sensor for detecting the position of the piston within the cylinder.

In embodiments, at least one of, preferably all of, the at least three linear actuators may be a pneumatic cylinder arrangement. Alternatively, the linear actuators may be, for example, a hydraulic cylinder arrangement, a linear motor, a belt drive actuator, a linear ball screw actuator, a lead screw actuator, or a spindle arrangement. A pneumatic cylinder arrangement has the advantage of very fast action times whereas the electric motor and actuator alternatives may provide very high positioning precision.

In embodiments, the pneumatic cylinder arrangement may be configured to act as a gas spring and/or cushioning element when inactive. Another advantage of the pneumatic cylinder arrangements is that they simultaneously can be used as a gas spring or damping element towards a force exerted by an object grabbed by the corresponding suction cup. This will allow for a passive force regulation of the gripping arrangement to prevent damage of the object to be handled.

In embodiments, the gripping arrangement may further comprise a spring member, a resilient member, and/or an elastic member arranged between the suction cup and the piston and/or between the linear actuator and its mounting point. Where the linear actuators are no pneumatic cylinder arrangements or do not comprise the configuration as a gas spring and/or cushioning element when inactive, these alternative means can be used for achieving the passive force regulation of the gripping arrangement to prevent damage of the object to be handled. They may also be implemented in addition to this configuration as a double failsafe feature.

In embodiments, at least one of, preferably all of, the at least three linear actuators may be selectively lockable in a selected position between the retracted position and the extended position. They may also be lockable in the retracted position and the extended position. With this function, it can be prevented that the pistons with their suction cups inadvertently move during the grabbing action.

In embodiments, at least one of, preferably all of, the at least three linear actuators
- has a stroke length between 60.0 mm and 600.00 mm; and/or
- can apply a force between 0.1 N and 300 N; and/or
- has a progression of 0 % or of 20 % to 55 % relating to the complete stroke length.

The stroke length may be at least 60.0 mm or at least 65.0 mm or at least 70.0 mm or at least 75.0 mm or at least 80.0 mm or at least 85.0 mm or at least 90.0 mm. The stroke length may be at most 600.00 mm or at most 590.00 mm or at most 580.00 mm or at most 570.00 mm or at most 560.00 mm or at most 550.00 mm or at most 540.00 mm. The stroke length may be in a range of between 60.0 mm and 600.00 mm or between 65.0 mm and 590.00 mm or between 70.0 mm and 580.00 mm or between 75.0 mm and 570.00 mm or between 80.0 mm and 560.00 mm or between 85.0 mm and 550.00 mm or between 90.0 mm and 540.00 mm.

The force may be at least 0.1 N or at least 0.3 N or at least 0.5 N or at least 0.7 N or at least 0.9 N or at least 1.1 N or at least 1.3 N or at least 1.5 N. The force may be at most 300 N or at most 290 N or at most 280 N or at most 270 N or at most 260 N or at most 250 N or at most 240 N or at most 230 N. The force may be between 0.1 N and 300 N or between 0.3 N and 290 N or between 0.5 N and 280 N or between 0.7 N and 270 N or between 0.9 N and 260 N or between 1.1 N and 250 N or between 1.3 N and 240 N or between 1.5 N and 230 N.

The progression may be 0 %. If the gas spring function is implemented by means of a pressure source constantly supplying pressure to the linear actuators instead of a valve closing the internal volume of the pressurized linear actuators, the force of the gas spring function will be constant because a pressure reducer in the supply tube between the linear actuator and the pressure source will keep the pressure constantly at the set pressure of the extended linear actuator. Hence, when pushing the movable member of the linear actuator inside, i.e., compressing the gas spring, the pressure cannot increase so that the force also remains the same.

Alternatively, the gas spring function may be implemented using a valve for closing the internal volume. Then, the progression may be at least 20 % or at least 22 % or at least 24 % or at least 26 % or at least 28 % or at least 30 %. The progression may be at most 55 % or at most 53 % or at most 51 % or at most 49 % or at most 47 % or at most 45 %. The progression may be from 20 % to 55 % or from 22 % to 53 % or from 24 % to 51 % or from 26 % to 49 % or from 28 % to 47 % or from 30 % to 45 %.

In embodiments, the at least three linear actuators may be arranged parallel to the at least three piston-cylinder arrangements. In such an embodiment, each of the piston-cylinder arrangements and their associated linear actuators are arranged side-by-side. By arranging the linear actuators parallel to the piston-cylinder arrangements, the gripper arrangement can be dimensioned very compact. Alternatively, the linear actuators may be arranged serial to the piston-cylinder arrangements, i.e., they are aligned in direction of their longitudinal axes and each linear actuator is arranged along the longitudinal axis of its associated piston-cylinder arrangement. Such a configuration may, for example, be useful for applications where a very small diameter of the gripper arrangement is preferred and/or a multitude of piston-cylinder arrangements are to be positioned very close together.

In embodiments, each suction cup may have a center point and/or each of the at least three piston-cylinder arrangements may have a longitudinal axis, and the center points may be spaced from each other by a, preferably the same, spacing distance.

Additionally or alternatively and independently thereof, the longitudinal axes may be spaced from each other by a, preferably the same, spacing distance, which spacing distance may be between 35.0 mm and 150.0 mm. The spacing distance may be at least 35.0 mm or at least 40.0 mm or at least 45.0 mm or at least 50.0 mm or at least 55.0 mm or at least 60.0 mm. The spacing distance may be at most 150.00 mm or at most 145.00 mm or at most 140.00 mm or at most 135.00 mm or at most 130.00 mm or at most 125.00 mm. The spacing distance may be in a range of between 35.0 mm and 150.00 mm or between 40.0 mm and 145.00 mm or between 45.0 mm and 140.00 mm or between 50.0 mm and 135.00 mm or between 55.0 mm and 130.00 mm or between 60.0 mm and 125.00 mm.

Such configurations result in a very compact design and, consequently, allow to easily reach even the corners of a bin for grabbing objects therefrom. At the same time, the holding points of the gripper are well distributed to ascertain a secure hold of the object for handling it.

In embodiments, the suction cups of the at least three piston-cylinder arrangements may be arranged, and preferably evenly distributed, on a circle. Additionally or alternatively and independently thereof, the suction cups of the at least three piston-cylinder arrangements may be arranged triangularly.

Such configurations also result in a very compact design and, consequently, allow to easily reach even the corners of a bin for grabbing objects therefrom. At the same time, the holding points of the gripper are well distributed to ascertain a secure hold of the object for handling it.

In embodiments, the suction cups of the at least three piston-cylinder arrangements may be arranged triangularly in the shape of an equilateral triangle or in an isosceles triangle. The inventors have surprisingly found that, when using triangular arrangements, in many cases the performance of the gripping arrangements having an isosceles triangular arrangement exceeds that of equilateral triangular arrangements.

When arranging the suction cups in the shape of an isosceles triangle, the angle between the isosceles sides may be at least 20° or at least 25° or at least 30° or at least 35° or at least 40° or at least 45°. The angle may be at most 160° or at most 155° or at most 150° or at most 145° or at most 140° or at most 135°. The angle may be in a range of between 20° and 160° or between 25° and 155° or between 30° and 150° or between 35° and 145° or between 40° and 140° or between 45° and 135°.

In embodiments, the fluidic connection between each of the at least three suction cups and the corresponding cylinders connection to the corresponding negative pressure source may be tubeless. Since the piston of the piston-cylinder arrangement is designed as a hollow shaft, the fluidic connection of the suction cups at the end thereof to the negative pressure source via the cylinder can vary its length without the need of a tube or hose connection, typically a silicone tube. It may telescope "internally" instead of having a usual external tube connection which compensates the varying distance. In these embodiments, the distance of the connector at the terminal end of the cylinder to the negative pressure source remains the same while the suction cups are extended with the piston moving inside the cylinder.

In embodiments, the gripping arrangement may comprise a force control system for force-controlled grabbing of the object by at least one suction cup of the at least three piston-cylinder arrangements. To this end, each of the piston-cylinder arrangements may be equipped with a force sensor for detecting the force exerted by the piston and suction cups on the surface of a grabbed object. This may be surveilled for preventing damage by actively repositioning the piston and suction cup in case of an excessive force detected. This may also be used as a corrective measure in a function where the gripper 3D-footprint is automatically adjusted to the objects to be grabbed.

In embodiments, the force control system may be a passive force control system, preferably implemented by at least one of the at least three linear actuators, which is configured as a gas spring. In this case, the force can be adjusted by adjusting the hardness of the gas spring. Alternatively, the force control system may be an active system comprising a force sensor and means for actively setting the force level based on its readings, for example, by controlling the hardness of the gas spring.

In embodiments, at least one of the at least three piston-cylinder arrangements and/or at least one of the at least three linear actuators may be provided with a position sensor and/or a force sensor, preferably for real-time control. A particularly advantageous embodiment comprises position sensors and force sensors in the piston-cylinder arrangements and/or linear actuators and is configured for real-time control. Such an embodiment is suitable for automatic control of the gripping arrangement and advanced control functions.

In embodiments, at least one of, preferably all of, the at least three linear actuators may be configured to displace its movable member with a velocity between 0.1 m/s and 1.0 m/s. The velocity may be at least 0.1 m/s or at least 0.15 m/s or at least 0.2 m/s or at least 0.25 m/s or at least 0.3 m/s or at least 0.35 m/s. The velocity may be at most 1.0 m/s or at most 0.95 m/s or at most 0.9 m/s or at most 0.85 m/s or at most 0.8 m/s or at most 0.75 m/s. The velocity may be in a range of between 0.1 m/s and 1.0 m/s or between 0.15 m/s and 0.95 m/s or between 0.2 m/s and 0.9 m/s or between 0.25 m/s and 0.85 m/s or between 0.3 m/s and 0.8 m/s or between 0.35 m/s and 0.75 m/s.

In embodiments, the gripping arrangement may further comprise a weight measuring device, preferably a weighing cell, for determining the weight of an object grabbed by the suction cups. The information on the weight of the grabbed object can then be used to adjust the gripping arrangement to the object. This may comprise, for example, adjusting the negative pressure supplied to the single suction cups, selectively activating suction cups designed for the respective weight range, activating more or less of the suction cups, or adjusting the force level of the gripping arrangement.

### Brief Description of the Drawings

**Figure 1** shows a partially transparent perspective view of a first gripping arrangement according to the disclosure.
**Figure 2** shows a perspective view of a second gripping arrangement according to the disclosure.

### Detailed Description of the Drawings

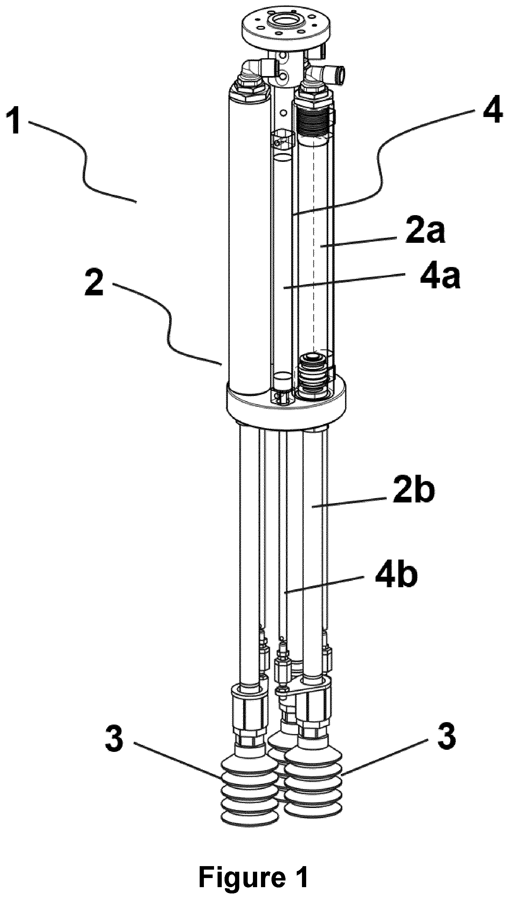

**Figure 1** shows a partially transparent perspective view of a first gripping arrangement **1** according to the disclosure having three grippers with identical suction cups **3** arranged in an equilateral triangular shape. The gripping arrangement **1** is shown in its fully extended position. The piston-cylinder arrangements **2** provide the suction cups **3** with the required negative pressure. Suction cups **3** are here shown with a bellows to provide additional flexibility for better contacting non-perpendicularly oriented object surfaces and limiting the contact forces. The negative pressure source is connected to the piston-cylinder arrangements **2** with the connectors at the top of the cylinders **2a.** Pistons **2b,** which are hollow, have the suction cups **3** fixed to their distal end and form the fluidic connection between the suction cups **3** and the cylinders **2a.**

While extending suction cups **3** with the pistons **2b,** the cylinders **2a** will not change their position and, hence, the distance between the connectors and the negative pressure source will also remain the same. Consequently, the connection can be made tubeless. The other end of the cylinders **2a** will stay in fluidic contact with the suction cups **3** through the hollow pistons **2b** while they are extended. This likewise provides a variable length connection without necessitating tubes.

Motion of the pistons **2b** is effected by the linear actuators **4.** In this example, the linear actuators **4** are pneumatic piston-cylinder arrangements with the cylinders being the stationary members **4a** arranged parallel to the cylinders **2a** of the piston-cylinder arrangements **2** at the upper side of the gripper arrangement **1** and the pistons being the movable members **4b** arranged at the lower side of the gripper arrangement **1** and connected with a flange to the distal end of the pistons **2b.**

When the movable members **4b** of the linear actuators **4** are retracted, the pistons **2b** with the suction cups **3** will slide into the cylinders **2a** guided and sealed by the sliding seals shown at the distal end of the cylinders **2a** and the proximal end of the pistons **2b.**

In other examples, the linear actuators **4** can be linear motors and/or can be arranged in flipped orientation, i.e., the stationary members **4a** being connected with the distal end of the pistons **2b** and the movable members **4b** being arranged parallel to the cylinders **2a** of the piston-cylinder arrangements **2** at the upper side of the gripper arrangement **1.** Further, the three suction cups **3** may also have different shapes and/or sizes to match different objects to be grabbed.

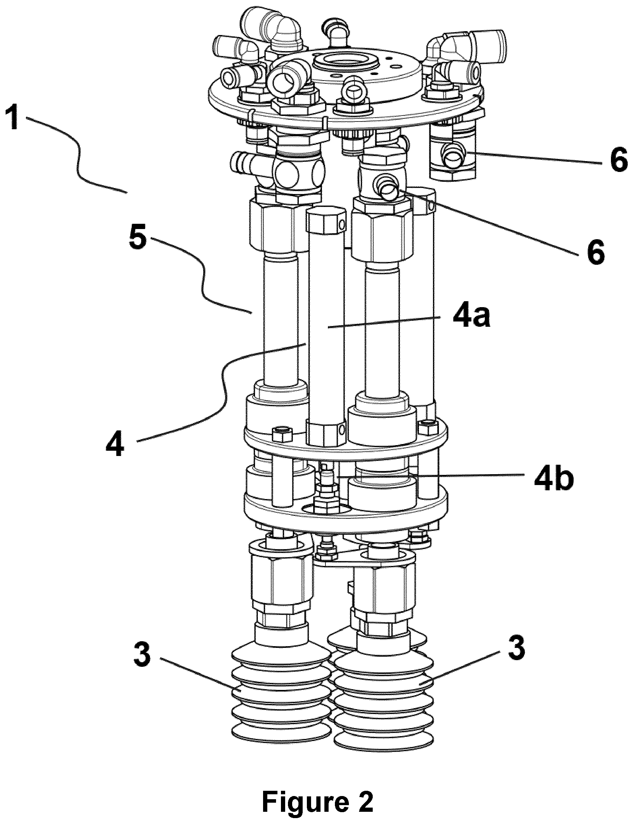

**Figure 2** shows a perspective view of a second gripping arrangement **1** according to the disclosure also having three grippers with identical suction cups **3** arranged in an equilateral triangular shape. The gripping arrangement **1** is shown in its fully retracted position. The suction units **5** comprise cylinders having a tube connector **6** at their proximal end for connecting it with the tube connector **6** installed at the stationary mounting plate of the gripping arrangement **1** to establish the connection to the negative pressure source. Since the distance between the two tube connectors **6** will increase when the suction units **5** are extended, the connection between them will be made with a sufficient length of a tube (not shown in the Figure), such as a silicone tube, to compensate for the elongation.

At the distal end of the cylinders of the suction units **5** are fixed in fluidic connection the suction cups **3.** In order to be extendable, the distal end of the cylinders of the suction units **5** is guided in a pair of sliding bearings.

Like in the first example, the linear actuators **4** for moving the suction units **5** are pneumatic piston-cylinder arrangements comprising stationary members **4a** arranged parallel to the cylinders of the suction units **5** at the upper side of the gripper arrangement **1** and the pistons being the movable members **4b** connected with a flange to the distal end of the cylinders of the suction units **5.** When the movable members **4b** of the linear actuators **4** are extended, the suction units **5** with the suction cups **3** will slide downwards in the sliding bearings while the tube at tube connector **6** maintains the connection to the negative pressure source.

### List of reference numbers

- **1**: gripping arrangement
- **2**: piston-cylinder arrangement
- **2a**: cylinder
- **2b**: piston
- **3**: suction cup
- **4**: linear actuator
- **4a**: stationary member
- **4b**: movable member
- **5**: suction unit
- **6**: tube connector

## Claims

1. Gripping arrangement **(1)** for a robot device, the gripping arrangement **(1)** comprising
- at least two piston-cylinder arrangements **(2),** each of the at least two piston-cylinder arrangements **(2)** having a cylinder **(2a)** and a piston **(2b)** relatively movable thereto between a retracted position and an extended position,
the piston **(2b)** being a hollow shaft having a first end that is slidably supported in a pressure-tight manner within the corresponding cylinder **(2a)** and having a second end that is provided with a suction cup **(3),**
the cylinder **(2a)** being fluidically connected to a negative pressure source for applying a suction pressure to the corresponding suction cup **(3)** via the cylinder **(2a)** and the piston **(2b)** to grab or release an object; and
- at least two linear actuators **(4),** wherein each of the at least two linear actuators **(4)**
is assigned to one of the at least two piston-cylinder arrangements **(2),** and
includes a stationary member **(4a)** and a movable member **(4b),** which are configured to actively move the piston **(2b)** and corresponding suction cup **(3)** of the assigned one of the at least two piston-cylinder arrangements **(2)** between the retracted position and the extended position independent of the other pistons **(2b)** and suction cups **(3)** of the at least two piston-cylinder arrangements **(2);**
wherein a distance between the retracted position and the extended position is between 60.0 mm and 450.00 mm.

2. The gripping arrangement **(1)** of claim 1, wherein each of the at least two linear actuators **(4)** is configured to move the assigned piston **(2b)** and corresponding suction cup **(3)** of the at least two piston-cylinder arrangements **(2)** continuously between the retracted position and the extended position.

3. The gripping arrangement **(1)** of claim 1 or 2, wherein the movable member **(4b)** is mechanically connected to the piston **(2b)** of the assigned one of the at least two piston-cylinder arrangements **(2)** to actively move the assigned piston **(2b)** and corresponding suction cup **(3)** between the retracted position, at least one intermediate position, and the extended position independent of the other pistons **(2b)** and suction cups **(3)** of the at least two piston-cylinder arrangements **(2).**

4. The gripping arrangement **(1)** of at least one of the preceding claims,
- comprising a closed-loop position control system for selectively controlling a position of each piston **(2b)** and corresponding suction cup **(3)** of the at least two piston-cylinder arrangements **(2);** and/or
- further comprising a spring element, a resilient element, and/or an elastic element arranged between the suction cup **(3)** and the piston **(2b)** and/or between the linear actuator **(4)** and its mounting point; and/or
- comprising at least three piston-cylinder arrangements **(2)** and at least three linear actuators **(4);** and/or
- comprising a force control system for force-controlled grabbing of the object by at least one suction cup **(3)** of the at least two piston-cylinder arrangements **(2),** wherein optionally the force control system is a passive force control system, preferably implemented by at least one of the at least two linear actuators **(4),** which is configured as a gas spring; and/or
- further comprising a weight measuring device, preferably a weighing cell, for determining a weight of an object grabbed by the suction cups **(3).**

5. The gripping arrangement **(1)** of at least one of the preceding claims, wherein at least one of, preferably all of, the at least two linear actuators **(4)**
- is a pneumatic cylinder arrangement, which preferably is configured to act as a gas spring and/or cushioning element when inactive; and/or
- is configured to displace its movable member **(4b)** with a velocity between 0.1 m/s and 1.0 m/s.

6. The gripping arrangement **(1)** of at least one of the preceding claims, wherein at least one of, preferably all of, the at least two linear actuators **(4)** is selectively lockable in a selected position between the retracted position and the extended position.

7. The gripping arrangement **(1)** of at least one of the preceding claims, wherein at least one of, preferably all of, the at least two linear actuators **(4)**
- has a stroke length between 60.0 mm and 600.00 mm; and/or
- can apply a force between 0.1 N and 300 N; and/or
- has a progression of 0 % or of 20 % to 55 % relating to the complete stroke length.

8. The gripping arrangement **(1)** of at least one of the preceding claims, wherein the at least two linear actuators **(4)** are arranged parallel to the at least two piston-cylinder arrangements **(2).**

9. The gripping arrangement **(1)** of at least one of the preceding claims, wherein each suction cup **(3)** has a center point and/or each of the at least two piston-cylinder arrangements **(2)** has a longitudinal axis, and wherein the center points are spaced from each other by a, preferably the same, spacing distance and/or the longitudinal axes are spaced from each other by a, preferably the same, spacing distance, which spacing distance is between 35 mm and 150 mm.

10. The gripping arrangement **(1)** of at least one of the preceding claims, wherein the suction cups **(3)** of the at least two or at least three piston-cylinder arrangements **(2)**
- are arranged, and preferably evenly distributed, on a circle; and/or
- are arranged triangularly;
wherein optionally the suction cups **(3)** of the at least three piston-cylinder arrangements **(2)** are arranged triangularly in the shape of an equilateral triangle or in an isosceles triangle.

11. The gripping arrangement **(1)** of at least one of the preceding claims, wherein at least one suction cup **(3)** of the suction cups **(3)** of the at least two piston-cylinder arrangements **(2)** is different in size and/or shape from the other suction cups (3) of the at least two piston-cylinder arrangements **(2).**

12. The gripping arrangement **(1)** of at least one of the preceding claims, wherein the fluidic connection between each of the at least two suction cups **(3)** and the corresponding cylinders **(2a)** connection to the corresponding negative pressure source is tubeless.

13. The gripping arrangement **(1)** of at least one of the preceding claims, wherein at least one of the at least two piston-cylinder arrangements **(2)** and/or at least one of the at least two linear actuators **(4)** is provided with a position sensor and/or a force sensor, preferably for real-time control.

14. Gripping arrangement **(1)** for a robot device, the gripping arrangement **(1)** comprising
- at least two suction units **(5),** wherein each of the at least two suction units **(5)** is fluidically connected to a negative pressure source for applying a suction pressure to the corresponding suction unit **(5)** to grab or release an object; and
- at least two linear actuators **(4),** wherein each of the at least two linear actuators **(4)**
+ is assigned to and connected with one of the at least two suction units **(5),** and
+ includes a stationary member **(4a)** and a movable member **(4b),** which are configured to actively move the assigned suction unit **(5)** between a retracted position and an extended position independent of the other suction units **(5)** of the at least two suction units **(5);**
wherein a distance between the retracted position and the extended position is between 60.0 mm and 450.00 mm.

15. Gripping arrangement **(1)** for a robot device, the gripping arrangement **(1)** comprising
- at least two suction units **(5),** wherein each of the at least two suction units **(5)** is fluidically connected to a negative pressure source for applying a suction pressure to the corresponding suction unit **(5)** to grab or release an object; and
- at least two linear actuators **(4),** wherein each of the at least two linear actuators **(4)**
+ is assigned to and connected with one of the at least two suction units **(5),** and
+ includes a stationary member **(4a)** and a movable member **(4b),** which are configured to actively move the assigned suction unit **(5)** position-controlled between a retracted position, at least one intermediate position, and an extended position independent of the other suction units **(5)** of the at least two suction units **(5).**
